# FASCICULE DE BREVET EUROPEEN

(11) **EP 3 289 287 B1**
(45) Date de publication et mention de la délivrance du brevet: **27.07.2022**
(21) Numéro de dépôt: 16720807.3
(22) Date de dépôt: 29.04.2016
(51) Int. Cl.: F23K 3/02, F23G 7/10

(54) **PROCÉDÉ D'APPROVISIONNEMENT, CONTAINER D'APPROVISIONNEMENT ET SYSTÈME DE GESTION ASSOCIÉS**
VERSORGUNGSVERFAHREN UND ZUGEHÖRIGER VERSORGUNGSBEHÄLTER SOWIE VERWALTUNGSSYSTEM
SUPPLY METHOD AND ASSOCIATED SUPPLY CONTAINER AND MANAGEMENT SYSTEM

(30) Priorité: 29.04.2015 FR 1553866
(43) Date de publication de la demande: 07.03.2018
(73) Titulaire: Engie, 92400 Courbevoie (FR)
(72) Inventeur: SUBREVILLE, Patrick, 27190 Ferrieres Haut Clocher (FR); FAMERY, Joël, 94700 Maisons Alfort (FR); GUERRINI, Olivier, 92270 Bois Colombes (FR); MAVOUNGOU, Corinne, 95720 Le Mesnil Aubry (FR); LEROY, Nathalie, 95600 Eaubonne (FR)
(74) Mandataire: Lavoix
(86) Numéro de dépôt international: PCT/EP2016/059671
(87) Numéro de publication internationale: WO 2016/174235

(56) Documents cités:
- WO-A1-84/00600
- FR-A1- 2 460 445
- FR-A1- 2 908 866
- US-A1- 2005 126 454

## Description

La présente invention concerne un procédé d'approvisionnement selon le préambule de la revendication 1.

Dans le domaine de la distribution de matières, et plus particulièrement dans le domaine de l'énergie, l'approvisionnement en matières solides représente un enjeu de service et de logistique. Les matières solides sont par exemple des particules, comme des particules de biomasse ou des particules de bois.

Dans le domaine de l'énergie plus particulièrement, l'approvisionnement en combustibles sous forme de particules peut être réalisé selon différents modes de transport.

Il est connu d'utiliser des camions de grands volumes autorisant la livraison en vrac de particules, par exemple, par des citernes soufflantes. Cependant, la traçabilité des produits livrés est difficile dans ce type de camions.

En outre, de tels camions spécifiques à la livraison de particules sont peu nombreux compte tenu de l'investissement que cela représente. Leur utilisation n'est pas toujours possible compte tenu de leur encombrement et du manque d'accès spécifiques aux installations. Le transport de particules apparait donc coûteux, particulièrement lorsqu'il s'agit de transporter de petites quantités de particules.

De plus, les particules, lors de leur manipulation et de divers frottements mécaniques, produisent des poussières. Ces poussières exposent les locaux dans lesquels sont stockées les particules, à un risque d'inflammation. Le transport des particules nécessite, donc, de nombreux dispositifs de sécurité sur l'ensemble de la chaîne logistique et d'usage. En outre, la formation de poussières induit une perte de la masse utile de particules.

Des procédés d'approvisionnement en produit sont décrits par exemple dans les documents WO 84/00600 A1, FR 2 908 866 A1, FR 2 460 445 A1 et US 2005/126454 A1.

En particulier, FR 2 908 866 A1 décrit une installation et un procédé de chauffage d'un bâtiment associé, l'installation comportant : au moins une chaudière agencée pour brûler un combustible solide, des moyens de raccordement de la chaudière à un circuit de chauffage dans lequel circule un fluide de chauffage, au moins une enceinte de stockage du combustible, agencée pour permettre son transport routier, un système d'alimentation automatique de la chaudière en combustible prélevé dans l'enceinte de stockage.

Dans ce contexte, l'invention vise à proposer un procédé d'approvisionnement qui préserve le produit sur toute la chaine logistique et réduit drastiquement les risques d'inflammation.

A cette fin, l'invention porte sur un procédé d'approvisionnement en produits selon la revendication 1.

Le procédé selon l'invention peut comprendre l'une ou plusieurs des caractéristiques des revendications 2 à 11, prise(s) isolément ou suivant toutes les combinaisons techniquement possibles.

L'invention a également pour objet un container d'approvisionnement selon la revendication 12.

L'invention a également pour objet un système de gestion selon la revendication 13.

Selon des modes de réalisation, le système de gestion selon l'invention peut comprendre l'une ou plusieurs des caractéristiques des revendications 14 et 15.

L'invention sera mieux comprise à la lecture de la description qui va suivre, donnée uniquement à titre d'exemple, et faite en se référant aux dessins annexés, sur lesquels :
- la figure 1 est une représentation schématique d'un système de gestion selon l'invention ;
- la figure 2 est une représentation schématique d'un container du système de gestion de la figure 1 ; et
- la figure 3 est une représentation schématique du procédé d'approvisionnement avec le système de gestion de la figure 1.

Dans la suite les termes « amont » et « aval » s'entendent par rapport au sens d'écoulement des particules.

Le système de gestion 1, selon l'invention, est destiné à gérer l'approvisionnement en produit 2 d'au moins une unité d'exploitation 4.

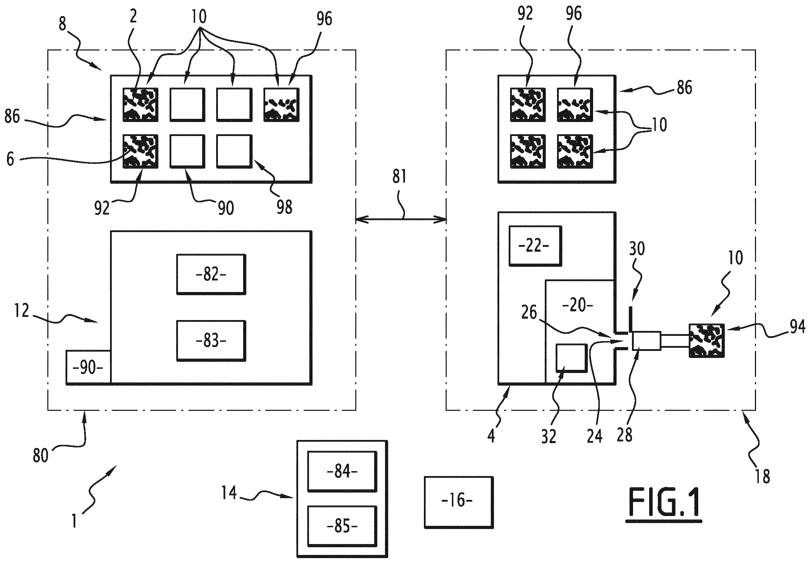

Tel que représenté sur la figure 1, le système de gestion 1 permet de gérer l'approvisionnement en produit 2 d'une unité d'exploitation 4.

Le produit 2 se présente sous la forme de particules 6.

Le système de gestion 1 comprend au moins une unité d'exploitation 4, un parc 8 de containers d'approvisionnement 10 en particules 6, une unité de remplissage 12 en particules 6 des containers 10, un dispositif de transport 14 adapté pour transporter une pluralité de containers 10 et un centre de gestion 16.

Dans l'exemple, le produit 2 est un combustible.

Le produit 2 comprend des matières organiques d'origine végétale, animale ou fongique, notamment du bois. Le produit 2 est par exemple un produit de biomasse. En variante, le produit 2 comprend en outre des additifs pour préserver les particules 6 de l'humidité.

La forme, le poids et la masse des particules 6 sont adaptés à leurs utilisations dans l'unité d'exploitation 4. En particulier, les particules 6 sont aptes à s'écouler sensiblement comme un fluide, à la manière d'un matériau granulaire.

Par exemple, les particules ont une forme cylindrique, sphérique ou toute autre géométrie apte à permettre un écoulement gravitaire. Par exemple, les particules 6 ont la forme de granulés ou la forme de plaquettes.

La dimension la plus longue des particules est, par exemple, comprise entre 2 mm et 70 mm.

Les particules 6 sont adaptées pour descendre dans un container 10, tel que décrit par la suite sans risque de blocage par viscosité.

En outre, les particules 6 sont stables et présentent une composition homogène et connue.

Par exemple, les particules 6 sont formées par extrusion, broyage, compactage et/ou déshydratation. Par exemple, dans le domaine de l'énergie, les particules 6 sont obtenues à partir de bois broyé, de farine de paille, de poudre de charbon et/ou de poudres de bois. Dans le domaine de l'énergie, les particules 6 peuvent également être composées de mélanges des éléments cités ci-dessus.

L'unité d'exploitation 4, représentée sur la figure 1, est disposée dans une zone de consommation 18. Par exemple, l'unité d'exploitation 4 est un équipement industriel.

Dans l'exemple, l'unité d'exploitation 4 est un équipement de production d'énergie destiné à être alimentée par le produit 2 combustible. L'unité d'exploitation 4 est apte à consommer les particules 6 et à produire, par exemple, de l'énergie thermique à partir de la combustion des particules 6. Par exemple, l'équipement de production d'énergie est une chaufferie à gaz et fioul reconvertie en une chaudière d'utilisation de biomasse.

L'unité d'exploitation 4 est, avantageusement, automatique. On entend par automatique que l'unité d'exploitation 4 est apte à puiser la quantité de particules 6 nécessaire à son fonctionnement sans intervention manuelle dans un container 10 connecté comme cela sera décrit par la suite.

L'unité d'exploitation 4 comprend un dispositif d'alimentation 20 en particules 6 et un module de communication 22.

Le dispositif d'alimentation 20 est le dispositif d'entrée des particules 6 dans l'unité d'exploitation 4.

Le dispositif d'alimentation 20 présente au moins une ouverture d'entrée 24. Chaque ouverture d'entrée 24 comporte un connecteur 26.

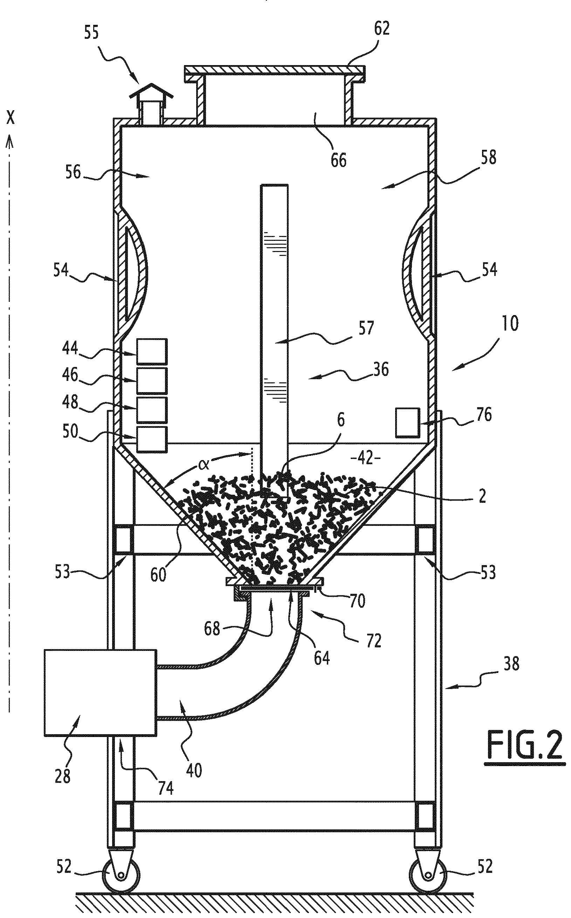

En outre, le dispositif d'alimentation 20 est propre à coopérer avec un module de connexion 28 du container 10 comme cela sera décrit par la suite, en regard de la figure 2. Par exemple, les formes du connecteur 26 et du module de connexion 28 sont complémentaires.

De plus, le dispositif d'alimentation 20 comporte une platine d'obturation 30 réglable entre une position d'ouverture totale, des positions de fermeture intermédiaire et une position de fermeture totale. Par exemple, la platine d'obturation 30 est propre à coulisser entre une position d'ouverture totale et une position de fermeture totale.

Dans la position d'ouverture totale, la platine d'obturation 30 permet l'accès vers l'intérieur de l'unité de remplissage 4 par l'ouverture d'entrée 24. Dans la position de fermeture totale, la platine d'obturation 30 obture totalement l'ouverture d'entrée 24.

Le dispositif d'alimentation 20 comprend un dispositif de contrôle 32. Le dispositif de contrôle 32 permet de contrôler le débit de particules 6 entrant dans l'unité d'exploitation 4. Par exemple, le dispositif de contrôle 32 commande la position de la platine d'obturation 30 selon les besoins de l'unité d'exploitation 4. En variante ou en complément, le dispositif de contrôle 32 commande la position de la platine d'obturation 30 en fonction du niveau de particules 6 dans le container 10.

Le module de communication 22 est propre à transmettre et à recevoir des données aux containers 10 et/ ou au centre de gestion 16.

En outre, le dispositif d'alimentation 20 comporte une vis sans fin permettant de transférer les particules 6 de l'ouverture d'entrée 24 à l'unité d'exploitation 4.

En variante, le dispositif d'alimentation 12 comporte un système d'aspiration/soufflage permettant de transférer les particules 6 de l'ouverture d'entrée 24 à l'unité d'exploitation 4.

Dans une variante, le dispositif d'alimentation comporte au moins deux ouverture d'entrée 24. Ainsi, une même unité d'exploitation 4 est par exemple apte à être connectée à plusieurs containers en parallèle.

Le parc de containers 8 comprend au moins un container d'approvisionnement 10 par unité d'exploitation 4.

Avantageusement, tous les containers 10 du parc 8 sont semblables mais identifiables par un dispositif de traçabilité.

Chaque container d'approvisionnement 10 est adapté pour la mise en oeuvre du procédé d'approvisionnement en particules 6 qui sera décrit par la suite. Ainsi, chaque container 10 est adapté pour être rempli avec des particules 6 par l'unité de remplissage 12, transporté par le dispositif de transport 14. De plus, chaque container 10 du parc 8 est apte à être connecté à l'unité d'exploitation 4 et propre à alimenter l'unité d'exploitation 4 en particules.

Le container 10 constitue un volume unitaire de livraison en particules 6.

Un container 10 va être décrit en détail en référence à la figure 2.

Le container 10 comprend un récipient 36, un support 38 et un embout de raccord 40 propre à être raccordé à l'unité d'exploitation 4. Le container 10 définit dans le récipient 36, un volume interne 42 de réception du produit 2 sous forme de particules 6.

En outre, le container 10 comporte avantageusement un capteur d'humidité 44 du volume interne 42, et un outil de mesure 46 du niveau de particules 6 dans le volume interne 42. Le container comporte un dispositif de traçabilité 48 et un module de transmission 50.

En outre, le container 10 est mobile. Le container 10 comprend avantageusement des roues 52, de façon à permettre son déplacement sans le dispositif de transport 14. Par exemple, les roues 52 sont des roulettes à cliquets. Avantageusement, le container 10 comporte quatre roues 52. En complément, le container 10 comporte avantageusement un moteur et des freins.

Par exemple, le système de freinage est directement agencé sur les roues 52.

Les roues 52 sont par exemple aptes à être tournée indépendamment les une des autres.

Les roues 52 sont propres à supporter le poids du récipient 36 lorsque le volume interne 42 est rempli de particules 6.

En variante ou en complément, le container 10 est transportable par un transpalette manuel. Le container 10 comprend, par exemple, des prises 53 pour fourches de chariot élévateur.

En outre, le container 10 comporte avantageusement des poignées 54 de manutention intégrées.

Dans l'exemple représenté, les poignées 54 sont disposées sur le récipient 36 et les roues 52, le moteur, les freins et les prises 53 pour fourches sont disposés sur le support 38.

Le container 10 est de forme allongée selon une direction longitudinale X, sensiblement verticale. Les termes « inférieurs » et « supérieurs » s'entendent par rapport à cette direction longitudinale X. La hauteur du container 10 selon la direction longitudinale X est adaptée pour éviter la formation de poussières lors de la connexion du container 10 à l'unité d'exploitation 4.

Avantageusement, la forme externe du container 10 ne présente pas de parties saillantes afin d'améliorer la sécurité lors de sa manipulation. L'ensemble des connectiques, comme l'embout de raccord 40 sont avantageusement intégrés dans des cavités du container 10.

En outre, la forme et les dimensions de la section transversale maximale du container 10 sont adaptées pour permettre le transport d'une pluralité de container 10 par le dispositif de transport 14.

Par exemple, la section transversale est maximale dans un plan situé à mi-hauteur du container. Par exemple, la section transversale du container 10 est rectangulaire ou hexagonale.

La largeur du container 10 est, par exemple, comprise entre 60 cm et 1,20 m. La longueur du container 10 est, par exemple, comprise entre 60 cm et 1,4 m. La hauteur du container 10 est avantageusement comprise entre 60 cm et 2 m.

Avantageusement, le container 10 est apte à recevoir de 0,2 m³ à 1,5 m³ de particules 6 dans son volume interne 42.

Les parois internes du récipient 36 définissant le volume interne 42 sont neutres chimiquement, et n'interagissent pas chimiquement avec le produit 2.

En outre, les parois du récipient 36 présentent une tenue mécanique par rapport aux particules 6 transportées. Par exemple, le récipient 36 comporte une armature externe de renforcement permettant le maintien en forme et la tenue mécanique du récipient 36 lorsque les particules 6 présentes dans le volume interne 42 sont en mouvement, par exemple, lors du chargement en particules 6, lors du transport du container 10 ou lors du transfert des particules 6 vers l'unité d'exploitation 4.

Le récipient 36 est étanche pour permettre un stockage temporaire des particules 6 dans le container 10.

En variante ou en complément, le récipient 36 du container 10 est respirant de façon à éviter une fermentation des particules 6. Par exemple, le récipient 36 comporte une soupape de ventilation 55. La soupape de ventilation 55 est propre à laisser s'échapper les gaz provenant du volume interne 42, mais empêcher l'entrée de gaz dans le volume intérieur 42. En complément de la soupape de ventilation 55, il est placé une soupape de sécurité permettant de préserver l'intégrité physique du container en cas d'obstruction de la soupape de ventilation 55 par tout corps étranger, comme de la neige, du givre, des insectes, des nids d'oiseaux ou autre.

Le récipient 36 comporte avantageusement des parois opaques 56 afin de protéger le produit 2 des rayons ultraviolets.

Tel que représenté sur la figure 2, le récipient 36 comporte, en outre, une fenêtre translucide 57 de visualisation du niveau de particules 6 du volume interne 42.

Par exemple, le récipient 36 est réalisé en plastique polyéthylène (PE) à haute densité ou en matériau métallique.

Le récipient 36 présente une partie haute 58 et une partie basse 60. En outre, le récipient 36 comporte un couvercle supérieur 62 et une platine inférieure 64.

La partie haute 58 définit une ouverture de remplissage 66 sur sa face supérieure orientée vers le haut du récipient 36. Les dimensions de l'ouverture de remplissage 66 sont adaptées pour permettre le chargement du container 10 par l'unité de remplissage 12. L'ouverture de remplissage 66 est propre à être obturée par le couvercle supérieur 62.

Le couvercle supérieur 62 est manœuvrable entre une position d'ouverture dans laquelle il permet l'accès au volume interne 42 par l'ouverture de remplissage 66 et le chargement des particules 6 dans le volume interne 42 et une position d'obturation dans lequel il obture l'ouverture de remplissage 66.

Le couvercle supérieur 62 est représenté dans sa position d'obturation sur la figure 2.

Dans la position d'obturation, le couvercle supérieur 62 est fixé de manière amovible à la partie haute 58 de sorte à empêcher le passage inopiné du couvercle supérieure 62 dans une position d'ouverture, par exemple, lors du transport du container 10 ou des mouvements du container 10. Par exemple, dans la position d'obturation, le couvercle supérieur 62 est vissé sur la partie haute 58.

Le couvercle supérieur 62 est étanche et/ou respirant. Avantageusement, le couvercle supérieur 62 est adapté pour laisser passer la vapeur d'eau provenant du volume interne 42 mais empêcher l'humidité externe d'accéder au volume interne 42. La matière du couvercle est par exemple du GoreTex^{™} ou toute autre matière respirante similaire.

La partie basse 60 présente la forme d'une trémie. L'angle α de la trémie est adapté pour faciliter l'écoulement des particules 6 dans le volume interne 42 vers une ouverture de vidage 68. L'angle α de la trémie est mesuré entre la direction longitudinale X et la paroi de la trémie. L'angle α de la trémie est avantageusement compris entre 30° et 50°.

L'angle α de la trémie est adapté à la composition et la nature des particules 6 pour un bon écoulement du produit.

L'ouverture de vidage 68 est en bas de la trémie. Tel que représenté sur la figure 2, l'ouverture de vidage 68 est au centre de la trémie. En variante, elle est positionnée différemment, par exemple, déportée sur l'un des bords de la trémie.

L'ouverture de vidage 68 est positionnée de sorte à être plus élevée que l'ouverture d'entrée 24 de l'unité d'exploitation 4 lorsque le container 10 est placé aux abords de l'unité d'exploitation 4. La hauteur de l'ouverture de vidage 68 dépend de la géométrie du container, de la position de l'ouverture de vidage 68, centrale ou déportée, de l'angle α de la trémie et du diamètre de l'ouverture de vidage..

La platine inférieure 64 est montée sur la partie basse 60, mobile entre une position de fermeture et une position de passage. Le platine inférieure 64 est représentée dans sa position de fermeture sur la figure 2.

Par exemple, la platine inférieure 64 est apte à coulisser horizontalement entre la position de fermeture et la position de passage.

Dans la position de fermeture, la platine inférieure 64 obture l'ouverture de vidage 68 et empêche les particules 6 du volume interne 42 de tomber par l'ouverture de vidage 68.

Dans la position de passage, la platine inférieure 64 libère l'accès de l'ouverture de vidage 68.

Les dimensions de l'ouverture de vidage 68 sont adaptées pour que dans la position de passage, les particules 6 du volume interne 42 s'écoulent et tombent par gravité par l'ouverture de vidage 68.

Par exemple, le diamètre de l'ouverture de vidage 68 est supérieur à 20 mm.

En outre, le récipient 36 comporte, par exemple, un opercule de maintien 70 apte à maintenir la platine inférieure 64 en position de fermeture. L'opercule de maintien 70 empêche un passage intempestif de la platine inférieure 64 en position de passage. L'opercule de maintien 70 est retirable.

Le support 38 est propre à assurer la tenue et la rigidité du container 10. Le support 38 est un cadre métallique et galvanisé à chaud, ou en acier inoxydable.

L'embout de raccord 40 est par exemple un tube creux présentant une extrémité amont 72 connectée à l'ouverture de vidage 68 et une extrémité aval 74.

L'embout de raccord 40 définit un conduit de circulation des particules 6 débouchant par l'extrémité amont 72 dans l'ouverture de vidage 68 et par l'extrémité aval 74.

Par exemple, l'embout de raccord 40 est venu de matière avec la partie basse 60. En variante, l'extrémité amont 72 de l'embout de raccord 40 est adaptée pour être connectée à l'ouverture de vidage 68, par exemple par vissage.

L'extrémité aval 74 de l'embout de raccord 40 comporte un module de connexion 28 adapté pour coopérer avec le dispositif d'alimentation 20.

Le module de connexion 28 est par exemple propre à être connecté au connecteur 26 de l'ouverture d'entrée 24 du dispositif d'alimentation 20.

Lorsque le dispositif d'alimentation 20 est connecté à l'embout de raccord 40, l'ouverture d'entrée 24 est en communication fluidique avec le conduit de circulation des particules 6.

Les dimensions et la position de l'ouverture d'entrée 24 et de l'embout de raccord 40 sont adaptées pour permettre l'écoulement des particules 6 depuis l'ouverture de vidage 68 vers l'unité d'exploitation 4.

En outre, l'ouverture d'entrée 24 du dispositif d'alimentation 20 étant située à un niveau plus bas que l'ouverture de vidage 68 du container 10, l'alimentation du dispositif d'alimentation 20 par le container 10 est gravitaire.

Le dispositif de traçabilité 48 indique des informations représentatives du container 10 ou de son contenu. Elle peut prendre la forme d'un code barre, d'une puce électronique, par exemple une puce RFID, ou de tout autre système de traçage communicant.

Par exemple, les informations représentatives comprennent les informations suivantes : la référence du container 10, la date de révision du container 10, l'origine du produit 2, la date de chargement du produit 2 dans le container 10, la date de connexion à une unité d'exploitation 4, la référence de l'unité d'exploitation 4, le taux d'humidité dans le volume interne 24 et/ou le volume de particules 6 restant dans le volume interne 24, la date de péremption, comme une date limite d'utilisation (DLU) ou une date limite de consommation (DLC) dans le cas de produits alimentaires.

Par exemple, si le dispositif de traçabilité 48 n'est pas électronique, le dispositif de traçabilité comprend une étiquette et une partie des informations comme le volume de particules et le taux d'humidité sont, par exemple, notées manuellement sur l'étiquette par un opérateur à intervalle régulier.

Le module de transmission 50 est apte à communiquer avec le centre de gestion 16 et/ou avec l'unité d'exploitation 4.

Par exemple, le module de transmission 50 est un module de radio-identification, RFID (de l'anglais *radio frequency identification*). Le module de transmission 50 comporte une antenne associée à une puce électronique.

Le module de transmission 50 est apte à mémoriser et à transmettre des données à distance. En particulier, le module de transmission 50 est apte à mémoriser et à transmettre les informations de le dispositif de traçabilité 48 et/ou les informations mesurées par le capteur d'humidité 44 ou l'outil de mesure 46 du niveau.

Dans un exemple, le module de transmission 50 de chaque container 10 est apte à communiquer à courte distance avec le module de communication 22 de l'unité d'exploitation 4. Le module de communication 22 de l'unité d'exploitation 4 est apte à communiquer avec le centre de gestion 16 situé à une distance plus importante. L'unité d'exploitation 4 sert de relais des informations du container 10.

En variante, chaque module de transmission 50 de chaque container 10 est apte à communiquer directement avec le centre de gestion 16.

Dans l'exemple représenté sur la figure 2, le container comprend en outre un module d'entrainement pneumatique 76 de particules 6.

Le module d'entrainement pneumatique 76 est, par exemple, propre à injecter de l'air ou de l'azote en dans le volume interne 42 à une pression avantageusement supérieure à 1 bar.

En référence à la figure 1, l'unité de remplissage 12 en particules 6 des containers 10 est disposée dans une zone de chargement 80. Par exemple, la zone de chargement 80 est située sur un site de fabrication de particules 6. En variante, la zone de chargement 80 est située sur un site de vente de particules 6.

La zone de chargement 80 et la zone de consommation 18 sont distantes et reliées par une voie de communication 81.

L'unité de remplissage 12 en particules 6 comporte par exemple un module de communication 82 avec le centre de gestion 16. L'unité de remplissage 12 comporte par exemple une unité de soufflage 83 propre à insérer des particules 6 dans un container 10 par l'ouverture de remplissage 66. En variante, l'unité de remplissage 12 comporte un réservoir de particules 6 et le remplissage du container 10 est gravitaire, le container 10 à charger étant placé sous le réservoir de particules de l'unité de remplissage 12.

Le dispositif de transport 14 est adapté pour transporter une pluralité de containers 10 en particulier sur la voie de communication 81 de la zone de chargement 80 à la zone de consommation 18.

Le dispositif de transport 14 comporte au moins un camion de livraison 84 et un module de communication 85 avec le centre de gestion 16. En outre, le dispositif de transport 14 comporte, avantageusement, une plateforme levante permettant de charger les containers 10 sur le camion de livraison 84.

Le camion de livraison 84 est avantageusement de petite capacité, notamment inférieure à 3,5 tonnes. La petite taille du camion de livraison 84 facilite son accès aux abords de l'unité d'exploitation 4 dans la zone de consommation 18.

Le camion de livraison 84 est, par exemple, un véhicule de livraison généraliste comme un véhicule semi-remorque ou un fourgon. Par exemple, le camion de livraison 84 comporte des chariots élévateurs, des porteurs, des carrosseries multiples à rideaux coulissants et/ou des plateaux bâchés. Par exemple, le camion de livraison 84 est un petit véhicule utilitaire à plateau.

La surface du camion de livraison 84 est adaptée pour transporter une pluralité de containers 10 posés côte à côte sans les empiler.

Avantageusement, le camion de livraison 84 est apte à transporter un nombre de containers 10 compris entre 1 et 5 containers 10 côte à côte sans empilement. Le nombre de container 10 transporté par le camion de livraison 84 dépend de la taille du camion de livraison et de la destination de la livraison.

Le centre de gestion 16 reçoit des informations provenant des containers 10 du parc 8, de l'unité d'exploitation 4, de l'unité de remplissage 12 et du dispositif de transport 14. En outre, le centre de gestion 16 transmet des instructions exécutables par l'unité de remplissage 12 et le dispositif de transports 14. Par exemple, les instructions comprennent le nombre de containers 10 à remplir, le nombre de containers 10 à livrer, les adresses de livraisons, des dates et/ou périodes de livraison, ainsi que le cas échéant un planning de livraison prévisionnel révisable, ajustable en fonction des températures extérieures constatées et prévues, etc.

Avantageusement, le système de gestion 1 comporte un ou des espaces de stockage temporaire 86. Par exemple, un espace de stockage temporaire 86 est situé dans la zone de chargement 80 et un espace de stockage temporaire est situé dans la zone de consommation 18.

Chaque espace de stockage temporaire 86 est apte à recevoir une pluralité de containers 10. Par exemple, dans chaque espace de stockage temporaire 86, un espace est réservé pour placer des containers à charger 90, des containers remplis 92, ou des containers à nettoyer.

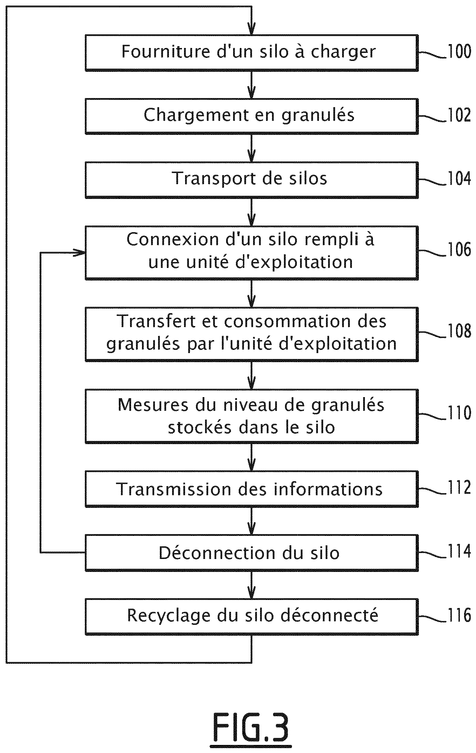

Le fonctionnement du système de gestion 1 va maintenant être décrit en référence à la figure 3 qui est un ordinogramme d'un exemple de mise en oeuvre du procédé d'approvisionnement en produit 2 selon l'invention.

Le procédé d'approvisionnement en produit 2 est un procédé cyclique.

Chaque cycle comprend les étapes suivantes : la fourniture 100 d'au moins un container 10, le chargement 102 du volume interne 42 du container 10, le transport 104 du container rempli 92 vers une unité d'exploitation 4, la connexion 106 du container rempli à une unité d'exploitation 4, le stockage des particules 6 dans le volume interne 42 du container connecté 94 à l'unité d'exploitation 4, le transfert et la consommation 108 de particules 6 du volume interne du container 42 connecté par l'unité d'exploitation 4. En outre, le cycle comprend la déconnection 114 du container 10 connecté à une unité d'exploitation 4 et le recyclage 116 du container 10 déconnecté, le container 10 recyclé étant utilisé à nouveau dans une étape de chargement.

Lors de l'étape de fourniture 100, au moins un container 10 est fourni. Le container 10 est fourni avec un volume interne 42 vide et propre. Le container 10 avant le chargement 102 est noté 90 et appelé container à charger 90. De plus, sur le container à charger 90, l'ouverture de vidage 68 est obturée par la platine inférieure 64 en position de fermeture et la platine inférieure 64 est avantageusement recouverte d'un opercule de maintien 70.

Lors de l'étape de chargement 102 du volume interne 42 du container 10, le couvercle supérieur 62 du container à charger 90 est placé dans sa position ouverte. Puis, le chargement du container à charger 90 est effectué par l'ouverture de remplissage 66 du container à charger 90 avec des particules 6 par l'unité de remplissage 12 en particules 6. Avantageusement, un volume unitaire de particules 6 est introduit dans le volume interne 42 du container à charger 90. Avantageusement plus de 90% du volume interne 42 du container 10 est rempli de particules 6. Ensuite, le couvercle supérieur 62 est placé dans sa position de fermeture et scellé afin de garantir l'impossibilité que des corps étrangers s'introduisent dans le container 10. A la suite de l'étape de chargement 102, le container 10 est appelé container rempli 92.

Par exemple, le container rempli 92 est stocké dans un espace temporaire de stockage 86 de la zone de chargement 80.

Lors de l'étape de transport 104, au moins un container rempli 92 est mis en place sur le camion de livraison 84, par exemple au moyen d'un chariot élévateur.

Le container rempli 92 est transporté depuis la zone de chargement 80 vers la zone de consommation 18 par le dispositif de transport 14.

Le container rempli 92 est déchargé du dispositif de transport 14 par exemple au moyen d'un chariot élévateur.

En variante, une pluralité de containers remplis 92 est transporté par le dispositif de transport 14. Avantageusement, plusieurs containers remplis 92 sont déposés dans la zone de consommation 18. Certains containers remplis 92 sont positionnés dans un espace temporaire de stockage 86 de la zone de consommation 18.

Le container rempli 92 est amené jusqu'à l'unité d'exploitation 4 par exemple au moyen des roues 52 du container 10 ou par un transpalette.

Le container rempli 92 est ensuite connecté au dispositif d'alimentation 20 de l'unité d'exploitation 4, la connexion 106 comprenant la mise en communication du volume interne 42 avec le dispositif d'alimentation 20 de sorte que les particules 6 soit transférables du volume interne 42 au dispositif d'alimentation 20. Par exemple, l'embout de raccord 40 est fixé à l'ouverture d'entrée 24 du dispositif d'alimentation 20. L'opercule de maintien 70 est retiré. Puis, la platine inférieure 64 du container rempli 92 est mise dans sa position de passage. Les particules 6 coulent alors dans l'embout de raccord 40 mais sont arrêtés par la platine d'obturation 30 de l'entrée.

A la suite de l'étape de connexion 106, le container 10 est appelé container connecté 94.

Selon les besoins de l'unité d'exploitation 4, la platine d'obturation 30 de l'ouverture d'entrée 24 est relevée par le dispositif d'alimentation 20 pour permettre l'alimentation de l'unité d'exploitation 4 en granulé 6. Du fait de la fluidité des particules 6, ils s'écoulent rapidement dans l'unité d'exploitation 4. En outre, les cas échéant la vis sans fin ou le système d'aspiration/soufflage du dispositif d'alimentation facilite le transfert des particules 6.

En outre, le cas échéant, le transfert des particules 6 vers l'unité d'exploitation 4 est effectué par entrainement pneumatique mis en œuvre par le module d'entrainement pneumatique.

L'unité d'exploitation 4 consomme les particules 6 stockés dans le container connecté 94. Le transfert des particules 6 du volume interne 42 du container 94 au dispositif d'alimentation 20 est automatique et gravitaire.

Le niveau des particules 6 diminue au fur et à mesure de la consommation par l'unité d'exploitation 4. Le niveau est contrôlable par un opérateur au moyen de la fenêtre translucide 56.

De plus, le niveau de granulé 6 dans le volume interne 42 est mesuré par l'outil de mesure 46.

En outre, le procédé comprend la mesure 110 de l'humidité dans le volume interne du container 10 par le capteur d'humidité 44.

Lors d'une étape de transmission 112, par exemple, les informations mesurées sont transmise par le module de transmission 50 à l'unité d'exploitation 4. Puis les informations sont transmises de l'unité d'exploitation 4 au centre de gestion 16. En variante, les informations sont directement transmises au centre de gestion 16 par le module de transmission 50.

Lorsque le niveau de particules 6 est en dessous d'un seuil prédéterminé, le centre de gestion 16 donne des instructions pour qu'un autre container rempli 92 soit connecté à l'unité d'exploitation 4 à la place du container connecté 94. De même, lorsque le niveau d'humidité est en dehors d'une gamme de tolérance, le centre de gestion 16 donne des instructions pour qu'un autre container rempli 92 soit connecté à l'unité d'exploitation 4 à la place du container connecté 94.

Le centre de gestion 16 organise le parc 8 de containers de manière à assurer la rotation des containers 10 tout en garantissant un approvisionnement de l'unité d'exploitation 4 en containers remplis 92.

Le centre de gestion 16 permet, par exemple, de gérer les facturations en fonction de la consommation de l'unité d'exploitation 4.

La déconnection 114 du container connecté 94 à une unité d'exploitation 4 comprend la fermeture de la platine inférieure 64 du container 94, la fermeture de la platine d'obturation 30 de l'unité d'exploitation 4 et la déconnection de l'embout de raccord 40.

A la suite de l'étape de déconnection 114, le container 10 est appelé container déconnecté 96.

Avantageusement, la déconnection 114 d'un container connecté 94 à l'unité d'exploitation 4 est directement suivie par une connexion 106 d'un container rempli 92 à l'unité d'exploitation 4.

En variante, si le dispositif d'alimentation 20 comporte deux ouverture d'entrée 24, chaque ouverture d'entrée 24 étant connectée à un container 10, la déconnection d'un container connecté 94 et la connexion d'un container rempli 92 sont effectués en temps masqué, c'est-à-dire sans interruption de l'approvisionnement de l'unité d'exploitation 4.

Par exemple, le container déconnecté 96 est par exemple stocké dans un espace temporaire de stockage 86 de la zone de consommation 18.

Puis le container déconnecté 96 est chargé sur le dispositif de transport 14 par exemple au moyen d'un chariot élévateur.

Le container déconnecté 96 est transporté depuis la zone de consommation 18 vers une zone de recyclage par le dispositif de transport 14. Le container déconnecté 96 est déchargé du dispositif de transport 14 par exemple au moyen d'un chariot élévateur.

Le container déconnecté 96 est ensuite recyclé.

Par exemple, le recyclage 116 comprend un nettoyage du container 10, un contrôle du container 10 et une remise en état du container 10.

Par exemple, lors de l'étape de nettoyage la qualité du produit 2 et des cendres associées est analysée ce qui permet un suivi qualité du container 10 et du produit 2.

Les défaillances particulières d'un container 10 sont détectées grâce aux informations mesurées par le capteur et l'outil de mesure et grâce aux informations transmises par l'unité d'exploitation 4.

A la fin du recyclage 116, la platine inférieure 64 est placée en position de fermeture et un nouvel opercule de maintien 70 est placé sur l'ouverture de vidage 68 du container. De plus, le couvercle supérieur 62 est placé dans la position de fermeture.

A la suite de l'étape de recyclage 116, le container 10 est appelé container recyclé 98.

Puis le container recyclé 98 est transporté vers la zone de chargement 80.

En variante, le recyclage 116 est effectué directement dans la zone de chargement 80.

Le container recyclé 98 est ensuite stocké dans une zone de stockage temporaire 86 jusqu'à ce que le container recyclé 98 devienne un container à charger 90 en fonction des instructions du centre de gestion 16.

Le procédé d'approvisionnement en produit 2 selon l'invention est fiable et optimisé.

En effet, chaque container 10 est à la fois une unité de stockage et d'approvisionnement. Un avantage de cette solution est que les manipulations des produits 2 sont limitées. Le produit 2 est ainsi préservé en qualité et en quantité.

En outre, l'absence de transvasement, entre les étapes permet de limiter les pertes de masses de particules 6 et la formation de poussières liées à la détérioration mécanique des particules 6. L'isolement du produit 2 dans le container 10 évite les contacts entre l'opérateur et le produit 2 et induit une réduction des risques associés à l'émission de poussières.

De plus, chaque container 10 est unique et traçable avec son étiquetage 48 et son module de transmission 50, qui comprend par exemple une puce de type RFID. Le suivi de la qualité du container 10 et du produit 2 renforce la sécurité.

Le container 10 est réutilisé après vérification et remise en état et nettoyage avant un nouveau chargement. Chaque container 10 effectue ainsi plusieurs cycles de vie. Le container 10 est réutilisable et durable.

De plus, la forme des containers 10 permet d'utiliser des dispositifs de transport standards. Les moyens d'accès de livraisons sont donc plus écologiques et moins coûteux.

Les délais de livraison sont améliorés et les stocks sont gérés avec plus de souplesse. Ainsi, les contraintes d'encombrement comme le nombre et la surface des zones de stockage 86 en particules 6 sont diminués.

De plus, les stocks sont gérés à distance par le centre de gestion 16.

Les informations fournies par les containers 10 permettent, en outre, de contrôler les capacités énergétiques des unités d'exploitation 4 et de prévoir par exemple des opérations de maintenance sur les unités d'exploitations 4.

Avantageusement, le dispositif de transport 14 comporte une pluralité de camion de livraison 84 permettant d'assurer un rythme de rotation des containers 10.

En variante, le camion de livraison 83 présente une grande capacité, notamment supérieure à 3,5 tonnes.

Dans une variante, le système de gestion 1 est destiné à gérer l'approvisionnement en produit 2 d'une pluralité d'unités d'exploitation, par exemple de 100 unités d'exploitation ou plus.

Dans une variante, le système de gestion 1 comporte plusieurs unités de remplissages12 en particules 6 dans différentes zones de chargement 80.

Le nombre de camion de livraison 84 est par exemple adapté au nombre d'unité d'exploitation 4 approvisionnées par le système de gestion 1.

Par exemple, le parc 8 de containers 10 comprend un nombre de containers d'approvisionnement 10 variable par unité d'exploitation 4 en fonction de la puissance, de la consommation prévisionnelle tenant compte de la température extérieure extrême et de la rotation jugée nécessaire des remplacements des containers 10. Par exemple, chaque container 10 est apte à alimenter n'importe quelle unité d'exploitation 4 de la pluralité d'unité d'exploitation 4.

En variante, le parc 8 de containers 10 est divisé en sous-groupe et chaque container 10 d'un sous-groupe est dédié à une ou quelques unités d'exploitation 4 spécifiques.

Dans une variante, l'unité d'exploitation 4 est une chaudière individuelle.

Dans une variante, l'unité d'exploitation 4 est un équipement de production d'énergie collectif.

Dans une variante, l'unité d'exploitation 4 est un équipement de production d'énergie tel qu'une chaudière individuelle ou collective, un équipement de production de vapeur industrielle, et d'électricité ou autre.

Dans une variante le produit 2 est un produit alimentaire sous formes de particules, par exemple pour la nutrition humaine ou pour la nutrition animale.

En variante, le produit 2 est un produit chimique solide sous forme de particules 6, par exemple pour le traitement des sols.

Dans un exemple les containers 10 sont adaptés pour être transportées sur des palettes de section transversale rectangulaire de 1 m par 1,2 m. Les dimensions transversale des containers sont alors avantageusement comprises entre 40 cm par 40 cm et 1m par 1,2 m.

Dans une variante, les roues 52 comprennent un système de freinage intégré commandée par la poignée 54 lorsque celle-ci est manœuvrée.

Dans une variante, les roues 52 sont motorisées et comprennent un système de freinage intégré et commandé par une poignée de frein manuelle.

Dans une variante les roues 52 sont motorisées et commandées par la poignée 54 ou par une télécommande avec ou sans fil.

Dans une variante, le module de transmission 50 est un système radio utilisant un protocole de communication connu, par exemple Wi-Fi (comme défini dans le standard 802.11 de l'IEEE), ou bien à bande étroite (UNB, « ultra narrow band » en anglais), ou autre. Ainsi, le container 10 est apte à communiquer avec les unités d'exploitation 4, l'unité de remplissage 12, ou directement avec le centre de gestion 16.

Dans une variante, le centre de gestion 16 assure et centralise le remplacement des containers 10 de manière automatique. Le centre de gestion 16 a une fonction de prédictions des besoins en particules 6 des unités d'exploitation 4, et est apte à déclencher automatiquement la livraison d'un ou plusieurs containers remplis 92 en tenant compte de la consommation habituelle des unités d'exploitation 4 et/ou de conditions climatiques spécifiques. Avantageusement, l'unité d'exploitation 4 est apte à forcer directement la livraison d'au moins un container rempli 92 et à annuler directement une telle livraison à l'encontre des prédictions du centre de gestion 16.

## Revendications

1. Procédé d'approvisionnement en produit (2), qui comprend les étapes suivantes :
- fourniture d'un parc (8) de containers (10), le parc (8) de containers (10) étant apte à alimenter une pluralité d'unités d'exploitation (4), chaque container (10) définissant un volume interne (42) de réception du produit (2) sous forme de particules (6);
- chargement du volume interne du container (10, 90) avec des particules (6) par une unique unité de remplissage (12) en particules (6);
- transport du container rempli (10, 92) vers l'unité d'exploitation (4) ;
dans lequel l'unité d'exploitation (4) comprend un dispositif d'alimentation (20) en particules (6) et le procédé comprend les étapes suivantes :
- connexion du container rempli (10, 92) à l'unité d'exploitation (4), la connexion comprenant la mise en communication du volume interne (42) avec le dispositif d'alimentation (20) de sorte que les particules (6) soit transférables du volume interne (42) au dispositif d'alimentation (20) ;
- stockage des particules (6) dans le volume interne (42) du container connecté (10, 94) à l'unité d'exploitation (4) ;
- transfert de particules (6) stockées dans le volume interne (42) du container connecté (10, 94) vers le dispositif d'alimentation (20) et consommation des particules (6) transférées par l'unité d'exploitation (4) ;
dans lequel l'unité d'exploitation (4) puise la quantité de particules (6) nécessaire à son fonctionnement dans le container connecté (10, 94) ;
dans lequel le niveau de particules (6) dans le container connecté (10, 94) diminue au fur et à mesure de la consommation par l'unité d'exploitation (4) **caractérisé en ce qu'**un centre de gestion (16) recevant des informations provenant des containers (10) du parc (8), des unités d'exploitation (4), de l'unité de remplissage (12) et du dispositif de transport (14), et transmettant des instructions exécutables par l'unité de remplissage (12) et le dispositif de transport (14).

2. Procédé selon la revendication 1, dans lequel le produit (2) est un combustible et le produit (2) comprend des matières organiques d'origine végétale, animale ou fongique, notamment du bois.

3. Procédé selon l'une quelconque des revendications 1 ou 2, dans lequel l'unité d'exploitation (4) est un équipement de production ou de conversion d'énergie, par exemple, une chaudière individuelle, une chaudière collective, un équipement de production de vapeur industrielle ou un équipement de production d'électricité.

4. Procédé selon l'une quelconque des revendications précédentes, dans lequel le transfert des particules (6) du volume interne (42) au dispositif d'alimentation (20) est automatique.

5. Procédé selon l'une quelconque des revendications précédentes, dans lequel le transfert des particules (6) du volume interne (42) au dispositif d'alimentation (20) est gravitaire.

6. Procédé selon l'une quelconque des revendications précédentes comprenant l'étape suivante :
- mesure du niveau de particules (6) et/ou de l'humidité dans le volume interne (42).

7. Procédé selon l'une quelconque des revendications précédentes, dans lequel le container (10) est étanche.

8. Procédé selon l'une quelconque des revendications précédentes, dans lequel lors de la fourniture au moins deux containers (10) sont fournis, le procédé comprenant l'étape suivante :
- déconnection du container connecté (10, 94) à une unité d'exploitation (4), la déconnection d'un container connecté (10, 94) étant directement suivie ou précédée par une connexion d'un container rempli (10, 92).

9. Procédé selon l'une quelconque des revendications précédentes, dans lequel le procédé comprend les étapes suivantes :
- déconnection du container connecté (10, 94) à une unité d'exploitation (4),
- recyclage du container déconnecté (10, 96), le container recyclé (10, 98) étant utilisé à nouveau dans une étape de chargement.

10. Procédé selon l'une quelconque des revendications précédentes, dans lequel le chargement du container (10, 90) est effectué par une ouverture de remplissage (66) située sur la face supérieure du container (10).

11. Procédé selon l'une quelconque des revendications précédentes, dans lequel le container (10) comprend des roues (52) et un système de freinage agencé sur les roues (52) et/ou le container (10) comprend des prises (54) pour fourches de chariot élévateur.

12. Container (10) d'approvisionnement adapté pour la mise en œuvre du procédé d'approvisionnement en particules (6) selon l'une quelconque des revendications 1 à 11, ledit container (10) étant mobile et définissant un volume interne (42) de réception d'un produit sous forme de particules (6), le container (10) comprenant :
- un dispositif de traçabilité (48) configuré pour indiquer des informations représentatives du container (10) ou de son contenu,
- un module de transmission (50) apte à mémoriser et à transmettre lesdites informations représentatives à un centre de gestion (16) et/ou à une unité d'exploitation (4).

13. Système de gestion (1) adapté à la mise en œuvre du procédé selon l'une quelconque des revendications 1 à 11 comprenant :
- un parc (8) de containers d'approvisionnement (10), chaque container (10) étant selon la revendication 12,
- une unique unité de remplissage (12) en particules (6) des containers (10),
- un dispositif de transport (14) adapté pour transporter une pluralité de containers (10),
- une pluralité d'unités d'exploitation (4),
et dans lequel le parc (8) de containers (10) est propre à alimenter les unités d'exploitation (4), chaque container (10) étant adapté pour être rempli avec des particules (6) par l'unité de remplissage (12), transporté par le dispositif de transport (14), connecté à l'unité d'exploitation (4), et pour stocker les particules (6) pendant leur consommation par l'unité d'exploitation (4) ;
le système de gestion (1) comprenant un centre de gestion (16) apte à recevoir des informations provenant des containers (10) du parc (8), des unités d'exploitation (4), de l'unité de remplissage (12) et du dispositif de transport (14), ainsi qu'à transmettre des instructions exécutables par l'unité de remplissage (12) et le dispositif de transport (14).

14. Système de gestion selon la revendication 13, dans lequel le centre de gestion (16) a une fonction de prédiction des besoins en particules (6) des unités d'exploitations (4), et est apte à déclencher automatiquement la livraison d'au moins un container rempli (92) en tenant compte de la consommation habituelle des unités d'exploitation (4) et/ou de conditions climatiques spécifiques.

## Patentansprüche

1. Verfahren zum Zuführen eines Produkts (2), das die folgenden Schritte umfasst:
- Bereitstellen eines Bestands (8) an Behältern (10), wobei der Bestand (8) an Behältern (10) geeignet ist, um eine Vielzahl von Betriebseinheiten (4) zu versorgen, wobei jeder Behälter (10) ein Innenvolumen (42) zur Aufnahme des Produkts (2) in Form von Partikeln (6) definiert;
- Befüllen des Innenvolumens des Behälters (10, 90) mit Partikeln (6) durch eine einzelne Fülleinheit (12) von Partikeln (6);
- Transportieren des gefüllten Behälters (10, 92) zu der Betriebseinheit (4); wobei die Betriebseinheit (4) eine Versorgungsvorrichtung (20) für Partikel (6) umfasst und das Verfahren die folgenden Schritte umfasst:
- Verbinden des gefüllten Behälters (10, 92) mit der Betriebseinheit (4), das Verbinden umfassend ein Herstellen einer Verbindung des Innenvolumens (42) mit der Versorgungsvorrichtung (20), sodass die Partikel (6) von dem Innenvolumen (42) zu der Versorgungsvorrichtung (20) übertragbar sind;
- Speichern der Partikel (6) in dem Innenvolumen (42) des mit der Betriebseinheit (4) verbundenen Behälters (10, 94);
- Übertragen von Partikeln (6), die in dem Innenvolumen (42) des verbundenen Behälters (10, 94) gespeichert sind, zu der Versorgungsvorrichtung (20) und Verbrauchen der durch die Betriebseinheit (4) übertragenen Partikel (6);
wobei die Betriebseinheit (4) die für ihren Betrieb erforderliche Menge an Partikeln (6) aus dem verbundenen Behälter (10, 94) zieht;
wobei das Niveau der Partikel (6) in dem verbundenen Behälter (10, 94) mit dem Verbrauch durch die Betriebseinheit (4) abnimmt, **dadurch gekennzeichnet, dass** ein Verwaltungszentrum (16) Informationen von den Behältern (10) des Bestands (8), den Betriebseinheiten (4), der Fülleinheit (12) und der Transportvorrichtung (14) empfängt und Anweisungen übermittelt, die von der Fülleinheit (12) und der Transportvorrichtung (14) ausführbar sind.

2. Verfahren nach Anspruch 1, wobei dem das Produkt (2) ein Brennstoff ist und das Produkt (2) organische Materialien pflanzlichen, tierischen oder pilzlichen Ursprungs, insbesondere Holz, umfasst.

3. Verfahren nach einem der Ansprüche 1 oder 2, wobei die Betriebseinheit (4) eine Anlage zum Erzeugen oder Umwandeln von Energie ist, z. B. ein Einzelkessel, ein Sammelkessel, eine Anlage zum Erzeugen von Industriedampf oder eine Anlage zum Erzeugen von Elektrizität.

4. Verfahren nach einem der vorherigen Ansprüche, wobei das Übertragen von Partikeln (6) aus dem Innenvolumen (42) zu der Versorgungsvorrichtung (20) automatisch erfolgt.

5. Verfahren nach einem der vorherigen Ansprüche, wobei das Übertragen von Partikeln (6) aus dem Innenvolumen (42) zu der Versorgungsvorrichtung (20) durch Schwerkraft erfolgt.

6. System nach einem der vorherigen Ansprüche, ferner umfassend den folgenden Schritt:
- Messen des Partikelniveaus (6) und/oder der Feuchtigkeit in dem Innenvolumen (42).

7. Verfahren nach einem der vorherigen Ansprüche, wobei der Behälter (10) dicht ist.

8. Verfahren nach einem der vorherigen Ansprüche, wobei bei dem Bereitstellen mindestens zwei Behälter (10) bereitgestellt werden, das Verfahren umfassend den folgenden Schritt:
- Trennen des verbundenen Behälters (10, 94) von einer Betriebseinheit (4), wobei das Trennen eines verbundenen Behälters (10, 94) direkt gefolgt oder vorausgegangen ist von einem Verbinden eines gefüllten Behälters (10, 92).

9. Verfahren nach einem der vorherigen Ansprüche, wobei das Verfahren die folgenden Schritte umfasst:
- Trennen des Behälters (10, 94), der mit einer Betriebseinheit (4) verbunden ist,
- Recyceln des getrennten Behälters (10, 96), wobei der recycelte Behälter (10, 98) erneut in einem Füllschritt verwendet wird.

10. Verfahren nach einem der vorherigen Ansprüche, wobei das Füllen des Behälters (10, 90) durch eine Einfüllöffnung (66) erfolgt, die sich an der Oberseite des Behälters (10) befindet.

11. Verfahren nach einem der vorherigen Ansprüche, wobei der Behälter (10) Räder (52) und ein an den Rädern (52) angeordnetes Bremssystem umfasst und/oder der Behälter (10) Aufnahmen (54) für Gabelstaplergabeln umfasst.

12. Behälter (10) zum Zuführen, der für die Durchführung des Verfahrens zum Zuführen von Partikeln (6) nach einem der Ansprüche 1 bis 11 geeignet ist, wobei der Behälter (10) beweglich ist und ein Innenvolumen (42) zum Aufnehmen eines Produkts in Form von Partikeln (6) definiert, der Behälter (10) umfassend:
- eine Rückverfolgungsvorrichtung (48), die konfiguriert ist, um Informationen anzugeben, die repräsentativ für den Behälter (10) oder seinen Inhalt sind,
- ein Übertragungsmodul (50), das geeignet ist, um die repräsentativen Informationen zu speichern und an ein Verwaltungszentrum (16) und/oder eine Betriebseinheit (4) zu übertragen.

13. Verwaltungssystem (1), das für die Durchführung des Verfahrens nach einem der Ansprüche 1 bis 11 geeignet ist, umfassend:
- einen Bestand (8) an Zuführbehältern (10), wobei jeder Behälter (10) nach Anspruch 12 ist,
- eine einzige Einheit (12) zum Befüllen der Behälter (10) mit Partikeln (6),
- eine Transportvorrichtung (14), die zum Transportieren einer Vielzahl von Behältern (10) geeignet ist,
- eine Vielzahl von Betriebseinheiten (4),
und wobei der Bestand (8) an Behältern (10) geeignet ist, die Betriebseinheiten (4) zu versorgen, wobei jeder Behälter (10) geeignet ist, durch die Fülleinheit (12) mit Partikeln (6) gefüllt zu werden, durch die Transportvorrichtung (14) transportiert zu werden, mit der Betriebseinheit (4) verbunden zu werden, und die Partikel (6) während ihres Verbrauchs durch die Betriebseinheit (4) zu speichern;
das Verwaltungssystem (1) umfassend ein Verwaltungszentrum (16), das geeignet ist, Informationen von den Behältern (10) des Bestands (8), den Betriebseinheiten (4), der Fülleinheit (12) und der Transportvorrichtung (14) zu empfangen und Anweisungen zu übertragen, die von der Fülleinheit (12) und der Transportvorrichtung (14) ausführbar sind.

14. Verwaltungssystem nach Anspruch 13, wobei das Verwaltungszentrum (16) eine Funktion zur Vorhersage des Partikelbedarfs (6) der Betriebseinheiten (4) aufweist und in der Lage ist, automatisch die Lieferung mindestens eines gefüllten Behälters (92) auszulösen, wobei der übliche Verbrauch der Betriebseinheiten (4) und/oder spezifische klimatische Bedingungen berücksichtigt werden.

## Claims

1. A supply method for supplying a product (2), which comprises the following steps:
- provision of a fleet (8) of containers (10), the fleet (8) of containers (10) being capable of supplying a plurality of operating units (4), each container (10) defining an internal volume (42) for receiving the product (2) in the form of particles (6);
- loading of the internal volume of the container (10, 90) with particles (6) by means of a single filling unit (12) for filling particles (6);
- transporting of the filled container (10, 92) to the operating unit (4);
in which the operating unit (4) comprises a supply device (20) for supplying the particles (6) and the method comprises the following steps:
- connecting of the filled container (10, 92) to the operating unit (4), the connection comprising placing the internal volume (42) in communication with the supply device (20) in a manner such that the particles (6) are transferable from the internal volume (42) to the supply device (20);
- storing the particles (6) in the internal volume (42) of the container connected (10, 94) to the operating unit (4);
- transferring the particles (6) stored in the internal volume (42) of the connected container (10, 94) to the supply device (20) and consuming the transferred particles (6) by the operating unit (4) ;
in which the operating unit (4) draws the quantity of particles (6) necessary for its operation into the connected container (10, 94) ;
in which the level of particles (6) in the connected container (10, 94) decreases progressively in accordance with the consumption thereof by the operating unit (4), **characterized in that** a management center (16) receiving information from the containers (10) of the fleet (8), from the operating units (4), from the filling unit (12) and from the transport device (14), and transmitting executable instructions by the filling unit (12) and the transport device (14).

2. A method according to claim 1, in which the product (2) is a fuel and the product (2) comprises organic materials of plant, animal or fungal origin, in particular wood.

3. A method according to any one of claims 1 or 2, in which the operating unit (4) is an equipment unit for generation or conversion of energy, for example, an individual boiler, a collective boiler, an industrial steam generation equipment unit or an electricity generation equipment unit.

4. A method according to any one of the preceding claims, in which the transfer of the particles (6) from the internal volume (42) to the supply device (20) is automatic.

5. A method according to any one of the preceding claims, in which the transfer of the particles (6) from the internal volume (42) to the supply device (20) takes place under the effect of gravity.

6. A method according to any one of the preceding claims that includes the following step:
- measuring of the level of particles (6) and/or of the moisture in the internal volume (42).

7. A method according to any one of the preceding claims, in which the container (10) is sealed.

8. A method according to any one of the preceding claims, in which during container provision at least two containers (10) are provided, the method including the following step:
- disconnection of the connected container (10, 94) from an operating unit (4), the disconnection of a connected container (10, 94) being directly followed or preceded by the connection of a filled container (10, 92).

9. A method according to any one of the preceding claims, in which the method comprises the following steps:
- disconnection of the connected container (10, 94) from an operating unit (4),
- recycling the disconnected container (1 0, 96), the recycled container (10, 98) being used again in a loading step.

10. A method according to any one of the preceding claims, in which the loading of the container (10, 90) is carried out through a filling opening (66) situated on the upper surface of the container (10).

11. A method according to any one of the preceding claims, in which the container (10) comprises wheels (52) and a brake system arranged on the wheels (52) and/or the container (10) comprises fork pockets (54) for the forklift forks.

12. A supply container (10) that is suitable for the operational implementation of the supply method for supplying particles (6) according to any one of claims 1 to 11, said container being movable and defining n internal volume (42) for receiving a product in a form of particles (6), the container (10) comprising:
- a traceability device (48) configured to indicate information representative about the container (10) or about its content,
- a transmission module (50) able to memorize and transmit said representative information to a management center (16) and/or to an operating unit (4).

13. A management system (1) that is capable of operationally implementing the method according to any one of claims 1 to 11 that includes:
- a fleet (8) of supply containers (10), each container (10) being according to claim 12;
- a single particle filling unit (12) for filling the containers (10) with particles (6);
- a transport device (14) that is capable of transporting a plurality of containers (10);
- a plurality of operating units (4);
and in which the fleet (8) of containers (10) is capable of supplying the operating units (4), each container (10) being adapted to be filled with particles (6) by the filling unit (12) transported by the transport device (14), connected to the operating unit (4), and capable of storing the particles (6) during their consumption by the operating unit (4);
the management system (1) comprising a management center (16) able to receive information from the containers (10) of the fleet (8), from operating units (4), from the filling unit (12) and from the transport device (14), and to transmit executable instructions by the filling unit (12) and by the transport device (14).

14. A management system according to claim 13, in which the management center (16) has a prediction function of predicting the requirements of the operating units (4) in respect of particles (6), and is able to automatically trigger the delivery of at least one filled container (92) by taking into account the usual consumption of the operating units (4) and/or specific climatic conditions.
